# FASCICULE DE BREVET EUROPEEN

(11) **EP 3 850 195 B1**
(45) Date de publication et mention de la délivrance du brevet: **26.10.2022**
(21) Numéro de dépôt: 19787040.5
(22) Date de dépôt: 12.09.2019
(51) Int. Cl.: F01D 25/28, B64F 5/50, F01D 25/24, B66C 1/10

(54) **INTERFACE DE SUPPORT AMOVIBLE POUR CARTER ANNULAIRE DE TURBOMACHINE**
ABNEHMBARE TRÄGERSCHNITTSTELLE FÜR EINE RINGFÖRMIGE TURBOMASCHINE
REMOVABLE SUPPORT INTERFACE FOR AN ANNULAR TURBOMACHINE CASING

(30) Priorité: 12.09.2018 FR 1858159
(43) Date de publication de la demande: 21.07.2021
(73) Titulaire: SAFRAN AIRCRAFT ENGINES, 75015 Paris (FR)
(72) Inventeur: MEYER, Julien, Alain, 77550 MOISSY-CRAMAYEL (FR); HAENTJENS, Bruno, Marie-Joseph, Anne Padoue, 77550 MOISSY-CRAMAYEL (FR); QUERNET, Luc, Bernard, Jean, 77550 MOISSY-CRAMAYEL (FR); PERSE, Erwan, Pierre, Antoine, 77550 MOISSY-CRAMAYEL (FR); THOMAZO, Maxime, Julien, 77550 MOISSY-CRAMAYEL (FR)
(74) Mandataire: Gevers & Orès
(86) Numéro de dépôt international: PCT/FR2019/052123
(87) Numéro de publication internationale: WO 2020/053530

(56) Documents cités:
- WO-A1-2017/203139
- FR-A1- 3 018 773
- FR-A1- 3 041 376
- FR-A1- 3 051 833

## Description

### DOMAINE TECHNIQUE

La présente invention concerne une interface de support. Plus particulièrement, l'invention concerne une interface de support pour carter moteur, notamment d'un moteur aéronautique comme une turbomachine, qui soit adapté à être utilisé lors de la fabrication ou de la manutention du moteur.

L'invention concerne également un carter annulaire de turbomachine configuré pour recevoir une telle interface de support. Elle concerne également un ensemble comprenant un tel carter annulaire et une telle interface de support, ainsi qu'une turbomachine comportant un tel ensemble. La présente invention concerne enfin un procédé de manutention d'un tel carter à l'aide d'une telle interface de support.

### ETAT DE L'ART

L'état de l'art comprend les documents FR A1 3 041 376, WO A1 2015/114276, WO-A1-2017/203139, FR-A1-3 051 833 et FR-A1-3 018 773.

Lors de la manutention des turbomachines, par exemple lors de leur assemblage ou de procédures de maintenance, il est souvent nécessaire de les soutenir dans une position élevée afin de permettre un accès plus aisé à leurs différents composants.

Dans la technique actuelle, au moins deux cavités de réception sont ménagées dans le carter annulaire des turbomachines. Ces cavités, diamétralement opposées, sont configurées pour recevoir l'extrémité d'un bras support solidaire d'un bâti. Pour soutenir le moteur, un bras support est ainsi introduit dans chaque cavité et fixé au carter de sorte à suspendre et maintenir le carter annulaire dans une position souhaitée. De la sorte, pour assurer un bon maintien du carter annulaire, il est nécessaire que chaque cavité de réception présente une profondeur utile suffisante.

Pour obtenir une telle profondeur, le carter annulaire est muni de surépaisseurs locales, aussi appelées bossages, dans lesquelles sont usinées les cavités de réception pour les bras support.

Ces surépaisseurs entraînent une augmentation du poids du moteur. Or, pour des raisons évidentes de rendement, il est souhaitable que le poids du moteur soit minimisé d'autant plus que ces surépaisseurs ne sont pas destinées à être utilisées pendant les phases de vol des aéronefs.

Afin de résoudre ce problème, des interfaces de support ont été proposées comprenant une pièce de couplage avec une face externe et une face interne, la face externe de cette pièce de couplage présentant une cavité apte à recevoir un bras de support, et la face interne de cette pièce de couplage étant apte à être montée sur une face externe d'un carter annulaire.

Par exemple, le document FR-A1-3 041 376 décrit des interfaces de support pouvant être fixées de manière amovible sur un carter de moteur aéronautique au moyens de boulons aptes à être boulonnés dans des pions équipant le carter moteur et muni d'un taraudage interne. Cependant, les interventions nécessitant la manutention des turbomachines peuvent être nombreuses au cours de la vie d'une turbomachine de sorte que ces interfaces de supports sont amenées à être montées et démontées un grand nombre de fois pouvant entrainer une usure importante des filetages des boulons et taraudages des pions et donc un risque de mauvaise tenue du moteur en suspension par les bras support. De la sorte, même si ces interfaces de support amovibles répondent à la contrainte de poids induite par le maintien à demeure des bossages sur le carter annulaire, les moyens de fixation de ces interfaces de support sur le carter annulaire ne permettent pas d'assurer un maintien en suspension de la turbomachine sécurisé sur le long terme.

La présente invention propose une solution simple et efficace de maintien en suspension des carters annulaires de turbomachines.

### EXPOSE DE L'INVENTION

A cet effet, l'invention concerne une interface de support amovible pour un carter annulaire de turbomachine, le carter annulaire comprenant des premiers pions en saillie sur une face externe, ces pions comportant une portion amincie et une extrémité libre reliée à la portion amincie par une surface tronconique, l'interface de support comprenant une pièce de couplage apte à être montée sur le carter annulaire, et au moins un élément d'accrochage en vue de la suspension du carter annulaire, des orifices ménagés dans la pièce de couplage, cette interface comporte en outre des moyens de verrouillage de la pièce de couplage sur le carter annulaire, ces moyens de verrouillage étant positionnés sur la pièce de couplage et comprenant, chacun, une pince présentant deux mâchoires, chaque pince étant mobile depuis une position ouverte dans laquelle un pion porté par le carter peut être engagé et désengagé de l'un desdits orifices et une position fermée dans laquelle le pion est bloqué dans cet orifice.

L'interface de support avec ses moyens de verrouillage selon l'invention constitue un système imperdable présentant l'avantage intéressant d'être simple et rapide d'utilisation.

De préférence et avantageusement, les mâchoires de la pince définissent un orifice en position fermée présentant une forme en entonnoir.

Ainsi, les mâchoires épousent en partie la forme d'une surface externe des premiers pions du carter annulaire assurant ainsi une bonne fixation de l'interface de support.

Selon un mode de réalisation, les deux mâchoires de la pince sont articulées autour d'une liaison pivot.

Selon un mode de réalisation, la liaison pivot des mâchoires de la pince est formée par une vis de fixation des mâchoires sur la pièce de couplage.

Selon un mode de réalisation avantageux, les mâchoires de cette pince présentent, à leurs extrémités libres, des trous de réception d'une vis assurant le verrouillage de la pince dans une position fermée.

Selon un mode de réalisation, les deux mâchoires de la pince s'étendent longitudinalement selon des axes respectifs parallèles l'un à l'autre et dans laquelle la pince est configurée pour qu'au moins une des mâchoire puisse être translatée perpendiculairement aux axes des mâchoires depuis la position ouverte vers la position fermée et réciproquement.

Selon un mode de réalisation, la translation d'au moins une mâchoire est obtenue par rotation d'au moins une visse de serrage traversant les deux mâchoires selon l'axe de la translation.

La présente invention concerne également un carter annulaire de turbomachine d'aéronef apte à coopérer avec une interface de support selon l'invention, comprenant une face interne et une face externe,
- des premiers pions en saillie sur la face externe ;
- ces premiers pions comportant une portion amincie et une extrémité libre reliée à la portion amincie par une surface tronconique et étant aptes à coopérer avec des orifices de l'interface de support selon l'invention.

Avantageusement, le carter annulaire comporte en outre :
- des seconds pions en saillie sur la face externe ;
- ces seconds pions étant sensiblement cylindriques et étant aptes à coopérer avec des orifices de l'interface de support selon l'invention.

Le carter annulaire selon l'invention présente l'avantage intéressant de n'être équipé que de pions frettés aptes à coopérer de manière simple et efficace avec l'interface de support garantissant une manutention rapide et aisée dudit carter annulaire.

La présente invention concerne encore un ensemble comprenant au moins un carter annulaire et une interface de support présentant au moins l'une quelconque des caractéristiques susmentionnées, dans lequel les premiers pions du carter annulaire sont configurés pour traverser des orifices de la pièce de couplage de l'interface de support, les mâchoires de la pince étant configurées pour se refermer sur les premiers pions de façon à serrer la pièce de couplage sur le carter annulaire.

Ainsi, l'interface de support selon l'invention est plaquée de manière efficace sur le carter annulaire empêchant ainsi un effet de bras levier qui amplifierait les reprises d'efforts au niveau des pions du carter.

Avantageusement, les seconds pions du carter annulaire sont configurés pour s'engager dans des orifices de la pièce de couplage pour permettre de centrage de l'interface de support sur le carter annulaire.

Ainsi, l'interface de support est bien positionnée sur le carter annulaire avant d'être plaquée et verrouillée sur le carter annulaire.

L'invention concerne encore une turbomachine d'aéronef caractérisée en ce qu'elle comporte un ensemble comprenant l'une des caractéristiques susmentionnées.

Ainsi, il est aisé d'assembler et de désassembler les différentes portions de carters annulaires constituant la turbomachine, en facilitant ainsi le montage et les interventions de maintenance.

L'invention concerne également un procédé de manutention d'un carter annulaire de turbomachine, comprenant les étapes de :
- application d'au moins une interface de support sur le carter annulaire de façon à ce que les premiers pions du carter annulaire traversent des orifices de la pièce de couplage de l'interface de support ;
- fermeture des mâchoires de la pince sur les premiers pions de façon à serrer la pièce de couplage de l'interface de support sur le carter annulaire.

Comme indiqué précédemment, il est aisé et rapide de fixer des interface de support selon l'invention sur un carter annulaire pour en assurer une suspension sécurisée pour tout type d'intervention sur la turbomachine.

### DESCRIPTION DES FIGURES

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue d'ensemble d'un moteur de turbomachine, soutenu par un dispositif de support par l'intermédiaire d'interfaces de support selon l'invention ;
- la figure 2 est une vue en perspective de l'interface de support selon l'invention
- la figure 3 est une vue en perspective montrant notamment la sous-face de l'interface de support selon l'invention ;
- la figure 4 est une vue de détail et en perspective du carter annulaire selon l'invention ;
- la figure 5 est une vue de détail en perspective montrant un premier pion et un second pions équipant le carter annulaire selon l'invention ;
- la figure 6 est une vue en coupe axiale de la figure 5 ;
- la figure 7 est une vue analogue à la figure 4 dans laquelle une interface de support est positionnée sur le carter annulaire ;
- la figure 8 une vue de détail et en perspective de l'interface de support montrant la pince ;
- la figure 9 est une vue de détail et en perspective montrant l'interface de support positionnée sur le carter annulaire et dans laquelle la pince est illustrée en position ouverte ;
- la figure 10 est une vue analogue à la figure 9 dans laquelle la pince est illustrée en position fermée ;
- la figure 11 est une vue en coupe selon l'axe A-A de la figure 10 ; et,
- la figure 12 est une vue de détail et en perspective d'un mode de réalisation d'une pince d'une interface de support selon l'invention.

### DESCRIPTION DETAILLEE

Dans le présent exposé, les termes « interne » et « externe » sont utilisés en référence à un positionnement par rapport à l'axe de rotation d'une turbomachine axiale.

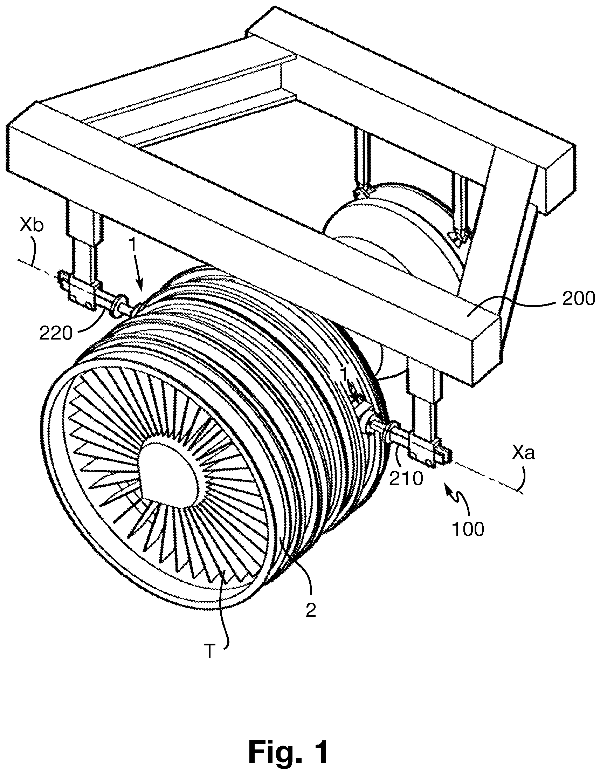

Sur la figure 1, est représenté un dispositif de support 100, en coopération avec un carter annulaire 2 de soufflante d'une turbomachine T, tel que, par exemple, un carter annulaire intermédiaire. Le dispositif de support 100 comporte un bâti 200, deux bras de support 210, 220 reliés au bâti 200 et s'étendant selon des axes longitudinaux respectifs Xa, Xb horizontaux. En position montée sur le dispositif de support 100, et comme il sera décrit plus en détail dans la suite, le carter annulaire 2 est donc soutenu par les bras de support 210, 220 par l'intermédiaire des deux interfaces de support 1.

Des moyens de déplacement (non représentés) permettent le déplacement de chaque bras de support 210, 220, notamment selon son axe longitudinal Xa, Xb.

Comme illustré sur la figure 1, les bras de support 210, 220 sont positionnés sensiblement face à face et de sorte à ménager entre eux un espace de réception suffisant pour le carter annulaire 2.

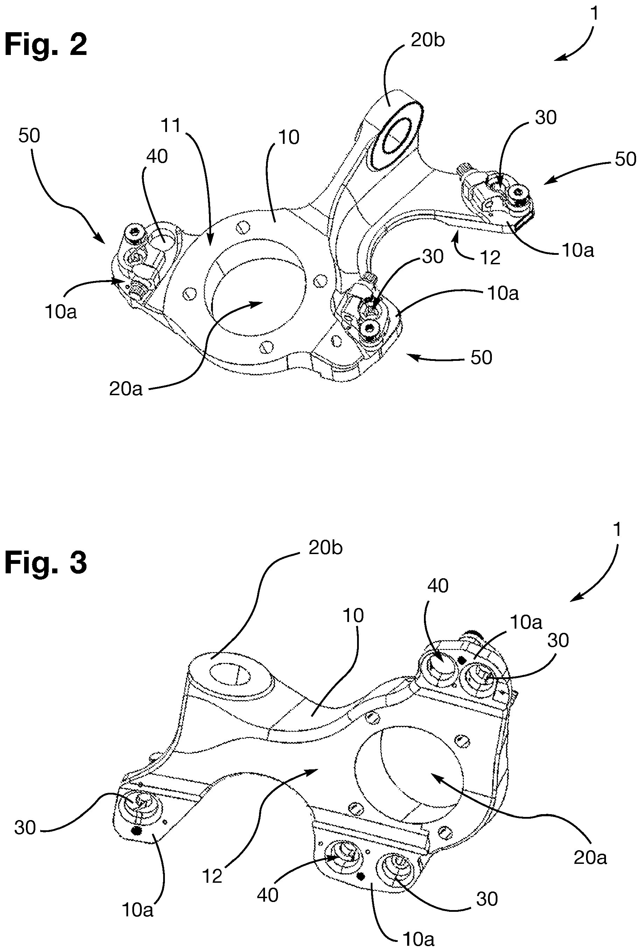

L'interface de support 1 est montrée en détail aux figures 2 et 3. Selon un exemple de réalisation de l'invention, cette interface de support 1 est configurée pour être rapportée, de manière amovible, sur un carter annulaire 2 de turbomachine T, par exemple en titane. Une telle interface de support 1 peut cependant être appliquée de manière analogue à tout autre type de dispositif comprenant un carter et nécessitant d'être maintenu et soutenu dans une position souhaitée. Avantageusement, deux interfaces de supports 1 sont destinées à être disposées et fixées sur une face externe 21 du carter annulaire 2, angulairement à 3 heures et à 9 heures en référence à un cadran horaire, c'est-à-dire de manière diamétralement opposée. Chaque interface de support 1 est destinée à relier le carter annulaire 2 à un dispositif de support et de manutention 100 tel qu'illustré à la figure 1. Les extrémités des bras 210, 220 du dispositif de support 100 sont configurées pour coopérer avec les interfaces de support 1 selon l'invention pour maintenir le carter 2 dans la position souhaitée.

Dans l'exemple illustré aux figures 2 et 3, l'interface de support 1 comprend une pièce de couplage 10 et au moins un élément d'accrochage 20a, 20b de cette pièce de couplage 10 sur le carter annulaire 2.

La pièce de couplage 10 comprend une face externe 11, une face interne 12. Cette face interne 12 est configurée pour être positionnée en regard de la face externe 21 du carter annulaire 2, lorsque l'interface de support 1 est montée sur le carter annulaire 2. Avantageusement, la face interne 12 de la pièce de couplage 10 présente un rayon de courbure analogue à celui de la face externe 21 du carter annulaire 2 afin de permettre un positionnement correct, sans jeu, de l'interface de support 1 sur le carter annulaire 2. Des premiers orifices 30 et des seconds orifices 40 sont ménagés dans la pièce de couplage 10. Les premiers orifices 30 sont traversant depuis la face externe 11 à la face interne 12 de la pièce de couplage 10. Les seconds orifices 40 sont soit traversant depuis la face externe 11 à la face interne 12 de la pièce de couplage 10, soit borgnes, autrement dit ils sont ménagés dans la face interne 12 de la pièce de couplage 10 et ne débouchent alors pas sur la face externe 11 de la pièce de couplage 10. Notamment, les premiers orifices 30 et les seconds orifices 40 sont ménagés dans des portions élargies 10a de la pièce de couplage 10

Les éléments d'accrochage en vue de la manutention du carter annulaire 2 comprennent des orifices 20a ménagés dans la pièce de couplage 10. Les extrémités des bras de support 210, 220 du dispositif de support 100 comportent alors une portion distale de section constante cylindrique, ici à profil circulaire, aptes à s'engager dans les orifices 20a.

La pièce de couplage 10 comporte encore un second élément d'accrochage 20b en vue de la suspension du carter annulaire 2 faisant saillie à partir de la face externe 11 de la pièce de couplage 10. Cet élément d'accrochage pointé 20b permet de suspendre le carter annulaire 2 par l'intermédiaire d'un crochet de manutention du dispositif de support 100, permettant notamment de soulever le carter annulaire 2 par exemple pour son accostage sur un aéronef.

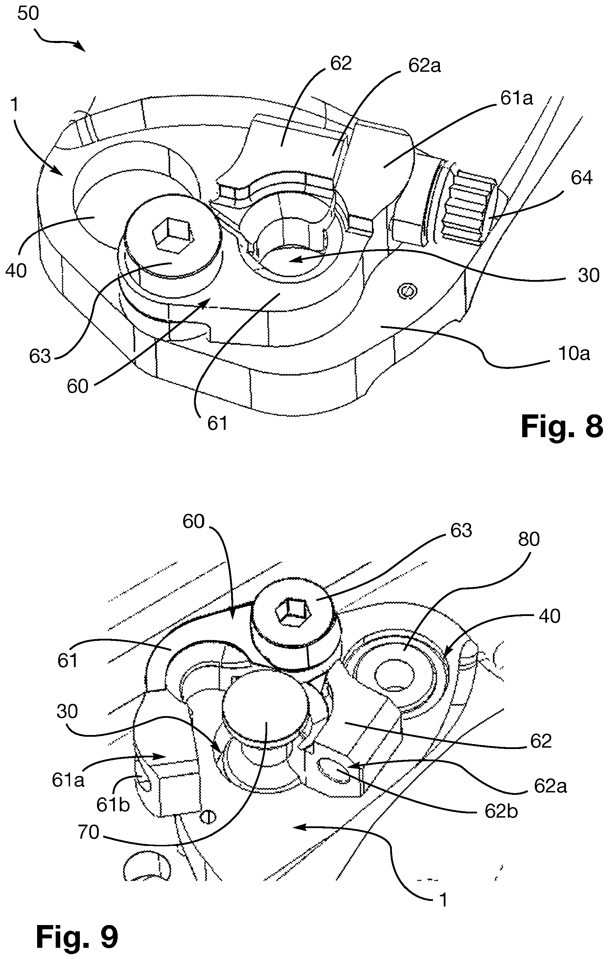

L'interface de support 1 comporte encore, sur la face externe de la pièce de couplage 10, des moyens de verrouillage 50 de la pièce de couplage 10 sur le carter annulaire 2. L'un de ces moyens de verrouillage 50 est montré en plus grand détail sur la figure 8. Le moyen de verrouillage 50 comprend une pince 60 présentant deux mâchoires 61, 62 articulées autour d'une liaison pivot, par exemple formée par une vis 63 de fixation des mâchoires 61, 62 sur la pièce de couplage 10. Les têtes des vis 63 sont accessibles par des outils traditionnels tels que des clefs.

Les premiers orifices 30 et les seconds orifices 40 sont configurés pour coopérer, respectivement, avec des premiers pions 70 et des seconds pions 80, ménagés en saillie sur la face externe 21 du carter annulaire 2.

Avantageusement, les premiers pions 70 et les seconds pions 80 sont agencés sur le carter annulaire 2 de sorte à former deux rangées annulaire. Les premiers pions 70 et les seconds pions 80 sont agencés séparés sur ces rangées annulaires de sorte à former plusieurs groupes, le nombre de groupe correspondant au nombre de pinces 60 de l'interface de support 1, chaque groupe comprenant au moins un premier pion 70 tronconique permettant la fixation d'une pince 60 et au moins l'un de ces groupes comprenant un second pion 80 simple cylindrique. Les groupes comprenant un second pion 80 cylindrique étant configurés pour être répartis sur les différentes rangées annulaires.

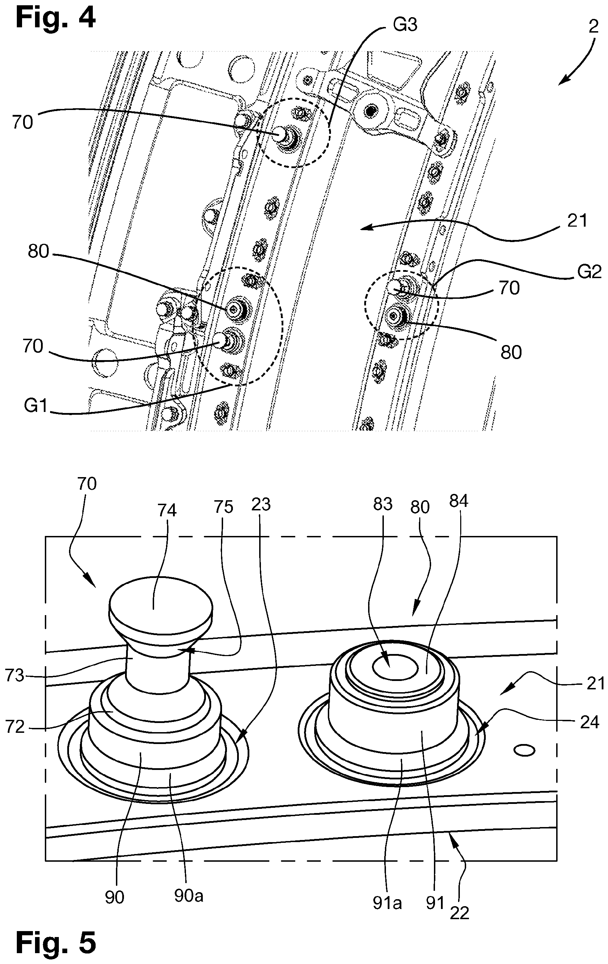

Selon l'exemple de réalisation illustré à la figure 4, le carter annulaire comporte avantageusement, dans une portion destinée à recevoir une interface de support 1 selon l'invention, trois premiers pions 70 et deux seconds pions 80, les second pions 80 étant positionnés à proximité de deux des trois premiers pions 70. Autrement dit, les premiers pions 70 et les seconds pions 80 sont organisés en trois groupes G1, G2, G3, deux G1, G2 de ces groupes comprenant un premier pion 70 et un second pions 80 (figure 5) et le troisième groupe G3 comprenant uniquement un premier pion 70.

En effet, l'environnement du carter annulaire 2 est très contraint de sorte qu'il peut être difficile d'intégrer un troisième second pion 80. De plus, l'utilisation de deux seconds pions 80 cylindriques pour trois groupes de pions suffisent à assurer la tenue mécanique de l'interface de support 1. Il est également à noter que l'ajout d'un troisième second pion 80 rendrait le montage hyperstatique contraignant ainsi l'assemblage, un tel montage hyperstatique nécessiterait en effet d'importants jeux pour autoriser le montage de l'interface de support 1 sur le carter annulaire 2, ce qui annulerait par conséquent l'un des intérêts des pions secondaires 80, à savoir l'aide à la reprise des forces de cisaillement (décrit ci-après).

Dans l'exemple de réalisation illustré, deux seconds pions 80 sont mis en œuvre. Toutefois, il est envisageable de n'avoir qu'un unique second pion 80 sur l'ensemble des groupes de pions, notamment pour un carter annulaire 2 d'une turbomachine d'aéronef de faible puissance présentant des dimensions et une masse moindre.

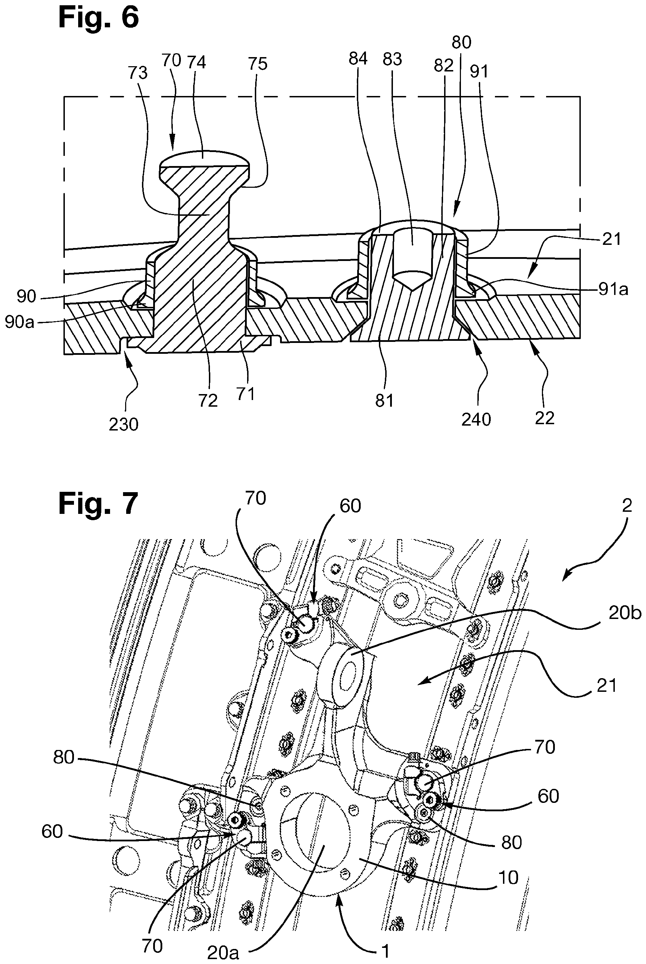

En référence aux figures 5 et 6, les premiers pions 70 et les seconds pions 80 sont engagés depuis une face interne 22 du carter annulaire 2, respectivement dans des orifices 23, 24 ménagés à cet effet dans le carter annulaire 2, et sont frettés dans le carter annulaire 2. Les premiers pions 70 comportent une base 71, un corps cylindrique 72 ayant une portion amincie 73 et une extrémité libre 74 reliée à la portion amincie 73 par une surface tronconique 75. La base 71 des premiers pions 70 constitue une extrémité élargie par rapport à leur corps cylindrique 72. Cette base 71 est apte à être engagée dans un lamage 230 prévu sur la face interne du carter annulaire 2 en entrée des orifices 23 de réception des premiers pions 70.

Les seconds pions 80 comprennent une base 81 et un corps cylindrique 82 muni d'un alésage axial 83 et une extrémité libre 84. L'alésage axial 83 est non taraudé et permet la fixation d'un outil pour le frettage des seconds pions 80 dans le carter annulaire 2. La base 81 des seconds pions 80 constitue une extrémité élargie par rapport à leur corps cylindrique 82. Cette base 81 est apte à être engagée dans un logement 240 prévu sur la face interne du carter annulaire 2 en entrée des orifices 24 de réception des seconds pions 80. Avantageusement, la base 81 des seconds pions 80 présente une forme tronconique et les logements 240 de réception de ces bases 81 présentent une forme complémentaire de surface tronconique. Les formes tronconiques complémentaires de la base 81 des seconds pions 80 et des logements 240 de réception de ces bases 81 permettent d'augmenter localement la surface de contact entre les seconds pions 80 et le carter annulaire 2, ceci malgré une faible épaisseur de peau de la virole du carter annulaire 2. Ainsi, la base 81 des seconds pions 80 est en appui conique contre le carter annulaire 2 augmentant ainsi la surface d'appui de reprise de cisaillement et permettant aux seconds pions 80 d'aider à la reprise de forces de cisaillement induites lorsque le moteur est suspendu par l'intermédiaire des interfaces de support 1, comme il sera expliqué plus en détail ci-après.

Les premiers pions 70 et le seconds pions 80 sont amenés à supporter d'importantes contraintes mécaniques, notamment des contraintes de charge de l'ordre de 9G, lors de la manutention ou du transport du carter annulaire 2. En effet, pour des raisons évidentes, le carter annulaire 2 ne doit pas pouvoir se détacher d'un dispositif de support 100 (détaillé ci-après) lors de sa manutention ou de son transport. Pour les renforcer et ainsi éviter leur arrachement en cours d'utilisation, ils comportent, chacun, une bague de maintien, respectivement 90, 91, permettant d'augmenter localement leur épaisseur respective et ainsi, leur robustesse. Ces bagues 90, 91 présentent une jupe annulaire 90a, 91a d'un diamètre supérieur à un diamètre desdites bagues 90, 91, une sous face de ces jupes annulaires 90a, 91a étant positionnée sur la face externe 21 du carter annulaire 2.

Les seconds pions 80 sont configurés pour être insérés dans les seconds orifices 40 de la pièce de couplage 10 des interfaces de support 1 par leur extrémité libre 84. Leur corps cylindrique 82 assure le centrage de la pièce de couplage 10 de l'interface de support 1 et son bon positionnement sur le carter annulaire 2.

Les premiers pions 70 sont configurés pour être insérés dans les premiers orifices 30 de la pièce de couplage 10 des interfaces de support 1 par leur extrémité libre 74. Leur portion amincie 73 ainsi que leur surface tronconique 75 étant configurés pour coopérer avec les moyens de verrouillage 50 pour assurer le plaquage et la fixation temporaire de l'interface de support 1 sur le carter annulaire 2, comme il sera expliqué plus en détail ci-après.

Les pinces 60 sont mobiles entre une position ouverte et une position fermée.

En référence à la figure 9, en position ouverte de la pince 60, les mâchoires 61, 62 sont écartées l'une de l'autre et permettent l'engagement et le désengagement d'un premier pion 70 porté par le carter annulaire 2 d'un premier orifice 30 de la pièce de couplage 10 de l'interface de support 1. De même, un second pion 80 porté par le carter annulaire 2 peut être engagé et désengagé d'un second orifice 40 de la pièce de couplage 10 de l'interface de support 1.

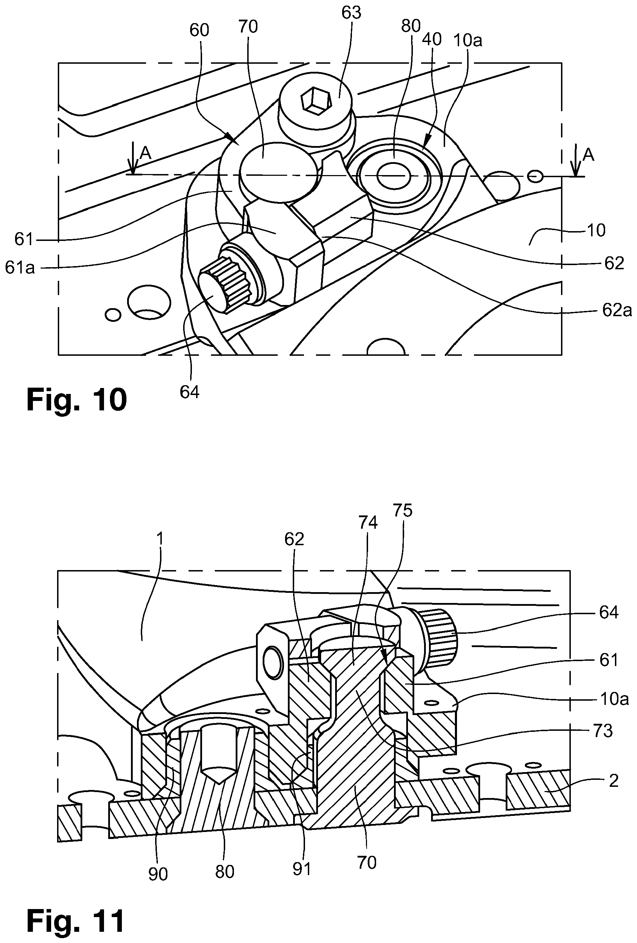

En référence aux figures 10 et 11, en position fermée de la pince 60, les mâchoires 61, 62 sont rapprochées l'une de l'autre de sorte à entourer et enserrer un premier pion 70 au niveau de sa portion amincie 73. En effet, les mâchoires 61, 62 de la pince 60 définissent, en position fermée, un trou ayant une forme en entonnoir, à savoir une portion de section circulaire surmontée d'une portion tronconique, afin de pouvoir épouser une surface externe définie par la portion amincie 73 et la surface tronconique 75 des premiers pions 70. Autrement dit, la portion de section circulaire de la forme en entonnoir est positionnée en regard de la portion amincie 73 du premier pion 70 et la portion tronconique du trou en entonnoir est positionnée en regard de la surface tronconique 75 du premier pion 70. La pince 60 est alors verrouillée. A cet effet, les mâchoires 61, 62 de chaque pince 60 présentent, à leurs extrémités libres 61a, 62a (à savoir leurs extrémités opposées à celles portant la vis 63 assurant la liaison pivot des mâchoires 61, 62), des trous 61b, 62b de réception d'une vis 64 assurant le verrouillage de la pince 60 dans la position fermée. De préférence et avantageusement, la vis 64 de verrouillage de la pince 60 est une vis rotulante permettant d'éviter sa mise en flexion lors de son serrage. De plus, les têtes des vis 64 sont accessibles par des outils traditionnels tels que des clefs.

En position fermée et verrouillée des pinces 60, les premiers pions 70 sont bloqués par les mâchoires 61, 62 dans les premiers orifices 30 et la pièce de couplage 10 est plaquée contre la face externe 21 du carter annulaire 2, comme représenté à la figure 7. Et, par conséquent, les seconds pions 80 sont également bloqués dans les seconds orifices 40.

Les moyens de verrouillage 50 et notamment les pinces 60 assurent ainsi le plaquage et la fixation en position de l'interface de support 1 sur le carter annulaire 2 par un double système à savoir un système de serrage par cône (appui conique au niveau de la surface tronconique 75) et un système de serrage par vis (avec la vis 64 de verrouillage des mâchoires 61, 62), ce qui augmente la robustesse de la fixation de l'interface de support 1 sur le carter annulaire 2.

Lors de la manutention d'un carter annulaire 2, par exemple en vue de l'assemblage d'une turbomachine T ou d'une procédure de maintenance de cette turbomachine T, au moins une interface de support 1, et de préférence deux interfaces de support 1 sont approchées du carter annulaire. Les faces internes 12 des interfaces de support 1 sont positionnée en regard de la face externe 21 du carter annulaire 2. Les premiers orifices 30 de la pièce de couplage 10 de chaque interface de support 1 sont positionnés alignés sur les premiers pions 70 du carter annulaire 2 et les seconds orifices 40 de la pièce de couplage 10 de chaque interface de support 1 sont positionnés alignés sur les seconds pions 80 du carter annulaire 2. Les pinces 60 sont alors présentées en position ouverte.

Les interfaces de support 1 sont ensuite appliquées sur le carter annulaire 2, de manière diamétralement opposée, de sorte que les premiers pions 70 du carter annulaire 2 traversent les premiers orifices 30 de la pièce de couplage 10 de chaque interface de support 1 et que les seconds pions 80 du carter annulaire 2 sont engagés dans les seconds orifices 40 de la pièce de couplage 10 (et traversent ces seconds orifices 40 dans le cas d'orifices traversant, donc non borgnes) de chaque interface de support 1.

Les pinces 60, fixée sur l'interface de support 1 par la vis 63, sont alors fermées sur les premiers pions 70 par rotation des mâchoires 61, 62 autour de leur liaison pivot constituée par la vis 63 de façon à serrer la pièce de couplage 10 de chaque interface de support 1 sur le carter annulaire 2.

Enfin, la vis 64 de verrouillage est vissée dans les trous 61b, 62b ménagés dans les extrémités 61a et 62a des mâchoires 61, 62 afin de verrouiller la pince 60 en position fermée et d'immobiliser la pièce de couplage 10 de chaque interface de support 1 sur le carter annulaire 2.

Un dispositif de support 100 peut alors être approché du carter annulaire 2. Les bras de support 210, 220 sont positionnés sensiblement en regard des interfaces de support 1 fixées sur le carter annulaire 2. Les extrémités des bras 210, 220 du dispositif de support 100 sont insérées et fixées aux éléments d'accrochage 20a des interfaces de support 1. Les éléments d'accrochage 20a des interfaces de support 1 sont par exemple munis de filets permettant le vissage des extrémités des bras 210, 220 également munis de filets.

Le carter annulaire 2 est alors relié au dispositif de support 100 et peut être maintenu de manière sécurisée dans une position souhaité et déplacé par action sur des moyens de déplacements connus en soi permettant le déplacement des bras de support 210, 220 du dispositif de support 100. Des crochets du dispositif de support 100 peuvent également être passés dans les orifices en saillie des seconds éléments d'accrochage 20b des interfaces de support 1 pour la suspension du carter annulaire 2.

Lorsque la manutention du carter annulaire 2 est terminée, les extrémités des bras 210, 220 du dispositif de support 100 sont retirées des éléments d'accrochage 20a, les crochets du dispositif de support 100 sont retirés des seconds éléments d'accrochage 20b le cas échéant, les vis de verrouillage 64 sont retirées pour libérer les mâchoires 61, 62, les pinces 60 sont ouvertes et les interfaces de support 1 sont déposées du carter annulaire 2.

On notera ici que les interfaces de support 1 destinées à être positionnées de part et d'autre du carter annulaire 2 en vue de la suspension de ce dernier peuvent être identiques en tous points. Avantageusement, les interfaces de support 1 peuvent présenter des arrangements symétriques afin d'être adaptées, chacune, à des contraintes géométriques qui peuvent être différentes selon le côté du carter annulaire 2 qu'elles sont amenées à équiper. Les interfaces de support 1 sont exécutées en tout matériaux présentant la robustesse nécessaire à sa fonction. Elles sont par exemple réalisées en acier.

Le carter annulaire 2 munis de premiers pions 70 et de seconds pions 80 et les interfaces de support 1 configurées pour coopérer avec les premiers et seconds pions 70, 80 du carter annulaire 2 constituent ainsi un ensemble robuste permettant la manutention simple et sécurisée d'un carter annulaire 2. Une turbomachine T comprenant un tel carter annulaire 2 selon l'invention peut ainsi être assemblée et désassemblée à plusieurs reprises tout au long de sa durée de vie, sans risque. En effet, le verrouillage par pince 60 de l'interface de support 1 selon l'invention n'induit pas d'usure au niveau des pions 70, 80 du carter annulaire 2 comme c'est le cas avec les pions taraudés de l'art antérieur.

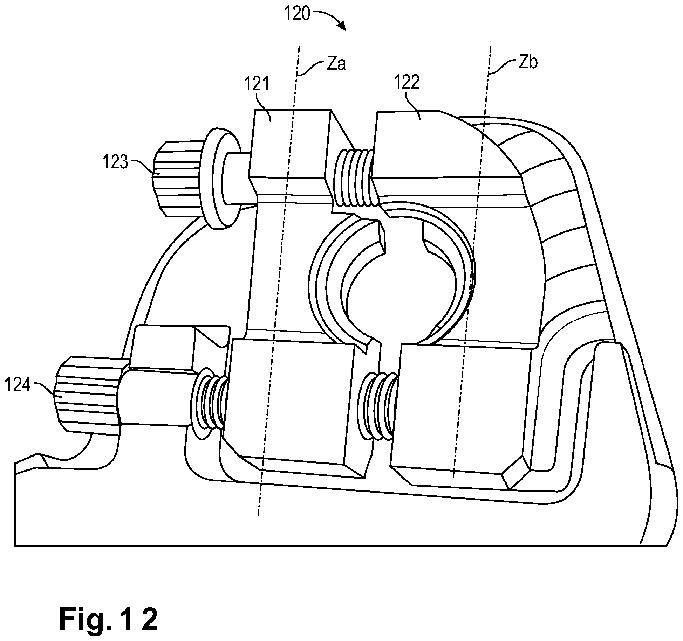

Dans un mode de réalisation alternatif de l'interface de support, décrit en référence à la figure 12, les mâchoires de la pince ne sont plus articulées autour d'une liaison pivot mais sont agencées parallèlement l'une à l'autre et peuvent coulisser pour passer de la position ouverte à la position fermée et réciproquement. Plus précisément, les deux mâchoires 121 et 122 de la pince 120 s'étendent longitudinalement selon des axes Za et Zb qui sont parallèles l'un à l'autre et au moins une des mâchoire peut être translatée perpendiculairement à ces axes de manière à faire passer la pince de la position ouverte à la position fermée ou inversement. Dans l'exemple représenté, la translation est obtenue par rotation des vis de serrage 123 et 124. De manière générale, une telle translation peut être obtenue par rotation d'au moins une visse de serrage qui traverse les deux mâchoires selon l'axe de la translation voulu. L'homme du métier appréciera que, dans ce cas, les deux mâchoires présentent des trous taraudés complémentaires du filetage de la ou des vis de serrage.

Un avantage particulier de la présente invention est que tous les éléments pouvant subir une usure à l'usage tel que les filets sont sur l'interface de support 1 et non plus sur un élément du carter annulaire 2. De la sorte et contrairement aux dispositifs de l'art antérieur où il était nécessaire d'immobiliser et d'intervenir sur une turbomachine, il est plus simple et moins couteux de remplacer une interface de support 1 selon l'invention si cette dernière n'est plus fonctionnelle.

## Revendications

1. Interface de support (1) amovible pour un carter annulaire (2) de turbomachine (T), le carter annulaire (2) comprenant des premiers pions (70) en saillie sur une face externe (21), ces pions (70) comportant une portion amincie (73) et une extrémité libre (74) reliée à la portion amincie (73) par une surface tronconique (75), l'interface de support (1) comprenant une pièce de couplage (10) apte à être montée sur le carter annulaire (2), et au moins un élément d'accrochage (20a, 20b) en vue de la suspension du carter annulaire (2), des orifices (30) ménagés dans la pièce de couplage (10), cette interface comporte en outre des moyens de verrouillage (50) de la pièce de couplage (10) sur le carter annulaire (2), ces moyens de verrouillage étant positionnés sur la pièce de couplage (10) cette interface étant **caractérisée en ce que** les moyens de verrouillage comprennent, chacun, une pince (60) présentant deux mâchoires (61, 62, 121, 122), chaque pince (60, 120) étant mobile depuis une position ouverte dans laquelle un des pions (70) porté par le carter (2) peut être engagé et désengagé de l'un desdits orifices (30) et une position fermée dans laquelle le pion (70) est bloqué dans cet orifice (30).

2. Interface de support (1) selon la revendication 1, les mâchoires (61, 62, 121, 122) de la pince (60, 120) définissent un orifice en position fermée présentant une forme en entonnoir.

3. Interface de support (1) selon l'une des revendications précédentes, dans laquelle les deux mâchoires (61, 62) de la pince (60) sont articulées autour d'une liaison pivot.

4. Interface de support (1) selon la revendication 3, dans laquelle la liaison pivot des mâchoires (61, 62) de la pince (60) est formée par une vis (63) de fixation des mâchoires (61, 62) sur la pièce de couplage (10).

5. Interface de support (1) selon l'une quelconque des revendications 3 ou 4, dans laquelle les mâchoires (61, 62) de cette pince (60) présentent, à leurs extrémités libres (61a, 62a), des trous (61b, 62b) de réception d'une vis (64) assurant le verrouillage de la pince (60) dans une position fermée.

6. Interface de support (1) selon l'une des revendications 1 et 2, dans laquelle les deux mâchoires (121, 122) de la pince (120) s'étendent longitudinalement selon des axes respectifs (Za, Zb) parallèles l'un à l'autre et dans laquelle la pince est configurée pour qu'au moins une des mâchoire puisse être translatée perpendiculairement aux axes des mâchoires depuis la position ouverte vers la position fermée et réciproquement.

7. Interface de support (1) selon la revendication 6, dans laquelle la translation d'au moins une mâchoire est obtenue par rotation d'au moins une vis de serrage (123, 124) traversant les deux mâchoires selon l'axe de la translation.

8. Carter annulaire (2) de turbomachine (T) d'aéronef apte à coopérer avec une interface de support (1) selon l'une quelconque des revendications 1 à 7, comprenant une face interne (22) et une face externe (21), des premiers pions (70) en saillie sur la face externe (21) ; **caractérisé en ce que** ces premiers pions (70) comportent une portion amincie (73) et une extrémité libre (74) reliée à la portion amincie (73) par une surface tronconique (75) et étant aptes à coopérer avec des orifices (30) de l'interface de support (1).

9. Carter annulaire (2) selon la revendication 8, **caractérisé en ce qu'**il comporte en outre :
- des seconds pions (80) en saillie sur la face externe (21) ;
- ces seconds pions (80) étant sensiblement cylindriques et étant aptes à coopérer avec des orifices (40) de l'interface de support (1) selon l'une quelconque des revendications 1 à 7.

10. Ensemble comprenant un carter annulaire (2) selon l'une des revendications 8 ou 9 et au moins une interface de support (1) suivant l'une quelconque des revendications 1 à 7, dans lequel les premiers pions (70) du carter annulaire (2) sont configurés pour traverser les orifices (30) de la pièce de couplage (10) de l'interface de support (1), les mâchoires (61, 62) de la pince (60) étant configurées pour se refermer sur les premiers pions (70) de façon à serrer la pièce de couplage (10) sur le carter annulaire (2).

11. Ensemble selon la revendication 10, dans lequel les seconds pions (80) du carter annulaire (2) sont configurés pour s'engager dans des orifices (40) de la pièce de couplage (10) pour permettre le centrage de l'interface de support (1) sur le carter annulaire (2).

12. Turbomachine (T) d'aéronef **caractérisée en ce qu'**elle comporte un ensemble selon l'une des revendications 10 ou 11.

13. Procédé de manutention d'un carter annulaire (2) d'une turbomachine (T) selon la revendication 12, comprenant les étapes de :
- application d'au moins une interface de support (1) sur le carter annulaire (2) de façon à ce que les premiers pions (70) du carter annulaire (2) traversent des orifices (30) de la pièce de couplage (10) de l'interface de support (1) ;
- fermeture des mâchoires (61, 62) de la pince (60) sur les premiers pions (70) de façon à serrer la pièce de couplage (10) de l'interface de support (1) sur le carter annulaire (2).

## Patentansprüche

1. Abnehmbare Trägerschnittstelle (1) für ein ringförmiges Gehäuse (2) einer Turbomaschine (T), wobei das ringförmige Gehäuse (2) erste Stifte (70) umfasst, die auf einer Außenseite (21) hervorstehen, wobei diese Stifte (70) einen verdünnten Abschnitt (73) und ein freies Ende (74), das über eine kegelstumpfförmige Oberfläche (75) mit dem verdünnten Abschnitt (73) verbunden ist, umfassen, wobei die Trägerschnittstelle (1) ein Kopplungsteil (10) umfasst, das geeignet ist, auf dem ringförmigen Gehäuse (2) montiert zu werden, und mindestens ein Einrastelement (20a, 20b) zur Aufhängung des ringförmigen Gehäuses (2), Öffnungen (30), die in dem Kopplungsteil (10) eingerichtet sind, wobei diese Schnittstelle weiter Verriegelungsmittel (50) des Kopplungsteils (10) auf dem ringförmigen Gehäuse (2) umfasst, wobei diese Verriegelungsmittel auf dem Kopplungsteil (10) positioniert sind, wobei diese Schnittstelle **dadurch gekennzeichnet ist, dass** die Verriegelungsmittel
jeweils eine Klammer (60) umfassen, die zwei Backen (61, 62, 121, 122) aufweist, wobei jede Klammer (60, 120) ausgehend von einer offenen Position, in der einer der Stifte (70), der von dem Gehäuse (2) getragen wird, in eine der Öffnungen (30) eingreifen und von dieser gelöst werden kann, und einer geschlossenen Position, in der der Stift (70) in dieser Öffnung (30) blockiert ist, beweglich ist.

2. Trägerschnittstelle (1) nach Anspruch 1, wobei die Backen (61, 62, 121, 122) der Klammer (60, 120) in der geschlossenen Position eine Öffnung definieren, die eine Trichterform aufweist.

3. Trägerschnittstelle (1) nach einem der vorstehenden Ansprüche, wobei die zwei Backen (61, 62) der Klammer (60) um eine Schwenkverbindung herum angegliedert sind.

4. Trägerschnittstelle (1) nach Anspruch 3, wobei die Schwenkverbindung der Backen (61, 62) der Klammer (60) durch eine Schraube (63) zum Befestigen der Backen (61, 62) auf dem Kopplungsteil (10) gebildet ist.

5. Trägerschnittstelle (1) nach einem der Ansprüche 3 oder 4, wobei die Backen (61, 62) dieser Klammer (60) an ihren freien Enden (61a, 62a) Löcher (61b, 62b) zum Aufnehmen einer Schraube (64) umfassen, die die Verriegelung der Klammer (60) in einer geschlossenen Position sicherstellen.

6. Trägerschnittstelle (1) nach einem der Ansprüche 1 und 2, wobei die zwei Backen (121, 122) der Klammer (120) sich längslaufend entlang entsprechender Achsen (Za, Zb), die parallel zueinander sind, erstrecken, und wobei die Klammer so konfiguriert ist, dass mindestens eine der Backen ausgehend von der offenen Position zur geschlossenen Position und umgekehrt senkrecht zu den Achsen der Backen verschoben werden kann.

7. Trägerschnittstelle (1) nach Anspruch 6, wobei die Verschiebung mindestens einer Backe durch Drehung mindestens einer Klemmschraube (123, 124) erhalten wird, die die zwei Backen entlang der Verschiebungsachse durchquert.

8. Ringförmiges Gehäuse (2) einer Turbomaschine (T) eines Luftfahrzeugs, das geeignet ist, mit einer Trägerschnittstelle (1) nach einem der Ansprüche 1 bis 7 zusammenzuwirken, umfassend eine Innenseite (22) und eine Außenseite (21),
erste Stifte (70), die auf der Außenseite (21) hervorstehen;
**dadurch gekennzeichnet ist, dass** diese ersten Stifte (70) einen verdünnten Abschnitt (73) und ein freies Ende (74), das über eine kegelstumpfförmige Oberfläche (75) mit dem verdünnten Abschnitt (73) verbunden ist, umfassen und geeignet sind, mit Öffnungen (30) der Trägerschnittstelle (1) zusammenzuwirken.

9. Ringförmiges Gehäuse (2) nach Anspruch 8, **dadurch gekennzeichnet, dass** es weiter umfasst:
- zweite Stifte (80), die auf der Außenseite (21) hervorstehen;
- wobei diese zweiten Stifte (80) im Wesentlichen zylinderförmig sind und geeignet sind, mit Öffnungen (40) der Trägerschnittstelle (1) nach einem der Ansprüche 1 bis 7 zusammenzuwirken.

10. Anordnung, umfassend ein ringförmiges Gehäuse (2) nach einem der Ansprüche 8 oder 9 und mindestens eine Trägerschnittstelle (1) nach einem der Ansprüche 1 bis 7,
wobei die ersten Stifte (70) des ringförmigen Gehäuses (2) konfiguriert sind, um die Öffnungen (30) des Kopplungsteils (10) der Trägerschnittstelle (1) zu durchqueren, die Backen (61, 62) der Klammer (60) konfiguriert sind, um sich um die ersten Stifte auf solche Weise zu schließen (70), dass das Kopplungsteil (10) auf das ringförmige Gehäuse (2) geklemmt wird.

11. Anordnung nach Anspruch 10, wobei die zweiten Stifte (80) des ringförmigen Gehäuses (2) konfiguriert sind, um in die Öffnungen (40) des Kopplungsteils (10) einzugreifen, um die Zentrierung der Trägerschnittstelle (1) auf dem ringförmigen Gehäuse (2) zu ermöglichen.

12. Turbomaschine (T) eines Luftfahrzeugs, **dadurch gekennzeichnet, dass** sie eine Anordnung nach einem der Ansprüche 10 oder 11 umfasst.

13. Verfahren zur Handhabung eines ringförmigen Gehäuses (2) einer Turbomaschine (T) nach Anspruch 12, umfassend die Schritte zum:
- Anlegen mindestens einer Trägerschnittstelle (1) auf dem ringförmigen Gehäuse (2) auf solche Weise, dass die ersten Stifte (70) des ringförmigen Gehäuses (2) Öffnungen (30) des Kopplungsteils (10) der Trägerschnittstelle (1) durchqueren;
- Schließen der Backen (61, 62) der Klammer (60) auf die ersten Stifte (70) auf solche Weise, dass das Kopplungsteil (10) der Trägerschnittstelle (1) auf das ringförmige Gehäuse (2) geklemmt wird.

## Claims

1. A removable support interface (1) for an annular casing (2) of a turbomachine (T), an annular casing (2) of an aircraft turbomachine (T), comprising first pins (70) projecting from an outer face (21), these first pins (70) comprising a thinned portion (73) and a free end (74) connected to the thinned portion (73) by a frustoconical surface (75), the removable support interface (1) comprising a coupling part (10) which can be mounted on the annular casing (2), and at least one attachment element (20a, 20b) for suspending the annular casing (2), orifices (30) provided in the coupling part (10), this interface comprises means (50) for locking the coupling part (10) to the annular casing (2), these locking means being positioned on the coupling part (10)
the removable support interface (1) being **characterised in that** the means (50) comprise each a clamp (60) having two jaws (61, 62, 121, 122), each clamp (60, 120) being movable from an open position in which one of the pins (70) supported by the casing (2) can be engaged and disengaged from one of said orifices (30) and a closed position in which the pin (70) is immobilized in this orifice (30).

2. The support interface (1) according to claim 1, the jaws (61, 62, 121, 122) of the clamp (60, 120) define an orifice in the closed position having a funnel shape.

3. The support interface (1) according to one of the preceding claims, in which the two jaws (61, 62) of the clamp (60) are hinged about a pivot connection.

4. The support interface (1) according to claim 3, in which the pivot connection of the jaws (61, 62) of the clamp (60) is formed by a screw (63) for fixing the jaws (61, 62) to the coupling part (10).

5. The support interface (1) according to any one of claims 3 or 4, in which the jaws (61, 62) of this clamp (60) have, at their free ends (61a, 62a), holes (61b, 62b) for receiving a screw (64) which locks the clamp (60) in a closed position.

6. The support interface (1) according to one of claims 1 and 2, in which the two jaws (121, 122) of the clamp (120) extend longitudinally along respective axis (Za, Zb) parallel to each other and in which the clamp is configured so that at least one of the jaws can be translated perpendicularly to the axis of the jaws from the open position to the closed position and vice versa.

7. The support interface (1) according to claim 6, in which the translation of at least one jaw is obtained by rotation of at least one clamping screw (123, 124) passing through both jaws along the axis of the translation.

8. An annular casing (2) of an aircraft turbomachine (T) able to cooperate with a support interface (1) according to any one of claims 1 to 7, comprising an inner face (22) and an outer face (21), first pins (70) projecting from the outer face (21);
**characterised in that** these first pins (70) comprise a thinned portion (73) and a free end (74) connected to the thinned portion (73) by a frustoconical surface (75) and being able to cooperate with orifices (30) of the support interface (1).

9. The annular casing (2) according to claim 8, **characterised in that** it further comprises:
- second pins (80) projecting from the outer face (21);
- these second pins (80) being substantially cylindrical and being capable of cooperating with orifices (40) of the support interface (1) according to any one of claims 1 to 7.

10. An assembly comprising an annular casing (2) according to one of claims 8 or 9 and at least one support interface (1) according to any one of claims 1 to 7, in which the first pins (70) of the annular casing (2) are configured to pass through the orifices (30) of the coupling part (10) of the support interface (1), the jaws (61, 62) of the clamp (60) being configured to close on the first pins (70) so as to clamp the coupling part (10) to the annular casing (2).

11. The assembly according to claim 10, wherein the second pins (80) of the annular casing (2) are configured to engage in orifices (40) of the coupling part (10) to enable the support interface (1) to be centred on the annular casing (2).

12. An aircraft turbomachine (T) **characterised in that** it comprises an assembly according to one of claims 10 or 11.

13. A method of handling an annular casing (2) of a turbomachine (T) according to claim 12, comprising the steps of:
- applying of at least one support interface (1) to the annular casing (2) so that the first pins (70) of the annular casing (2) pass through orifices (30) of the coupling part (10) of the support interface (1);
- closing the jaws (61, 62) of the clamp (60) on the first pins (70) so as to clamp the coupling part (10) of the support interface (1) to the annular casing (2).
